# EUROPÄISCHE PATENTSCHRIFT

(11) **EP 2 792 448 B1**
(45) Veröffentlichungstag und Bekanntmachung des Hinweises auf die Patenterteilung: **16.03.2016**
(21) Anmeldenummer: 14164830.3
(22) Anmeldetag: 16.04.2014
(51) Int. Cl.: B23Q 1/48, B23Q 5/10, B23Q 1/62

(54) **Bearbeitungsstation für Flugzeugstrukturbauteile**
Machining station for structural components of aircraft
Station d'usinage de composants de structure d'avion

(30) Priorität: 16.04.2013 DE 202013003544 U
(43) Veröffentlichungstag der Anmeldung: 22.10.2014
(73) Patentinhaber: Brötje-Automation GmbH, 26215 Wiefelstede (DE)
(72) Erfinder: Steinhäuser, Carsten, 27283 Verden (DE); Völz, Mathias, 26127 Oldenburg (DE)
(74) Vertreter: Gottschald, Jan

(56) Entgegenhaltungen:
- US-A- 6 085 961
- US-B2- 8 220 134

## Beschreibung

Die Erfindung betrifft eine Bearbeitungsstation für Flugzeugstrukturbauteile mit den Merkmalen des Oberbegriffs von Anspruch 1.

Die Herstellung von Flugkörpern und insbesondere Flugzeugen umfasst die Bearbeitung großer Strukturbauteile wie etwa der Flügel und des Rumpfes oder Teilen davon in speziellen Bearbeitungsstationen. In einer solchen Bearbeitungsstation werden z.B. durch eine Nietmaschine die notwendigen Verbindungen an dem Flugzeugstrukturbauteil hergestellt. Eine Besonderheit auf diesem technischen Gebiet ist, dass diese regelmäßig sehr großen und auch schweren Flugzeugstrukturbauteile so gehandhabt und manipuliert werden müssen, dass die Nietmaschine die entsprechenden Nietverbindungen anbringen kann. Dies setzt eine weitgehend freie Bewegbarkeit der zu bearbeitenden Flugzeugstrukturbauteile in der Bearbeitungsstation voraus.

Aus dem Stand der Technik, so etwa aus der als nächstkommend gesehenen US 8,220,134 B2, ist es bekannt, bei einer Bearbeitungsstation zwei Positioniertürme vorzusehen, zwischen denen in Längsrichtung ein Aufspannrahmen getragen wird, welcher ein zu bearbeitendes Flugzeugstrukturbauteil aufnimmt. Die Positioniertürme dienen zur geeigneten Positionierung des Aufspannrahmens und damit auch des Flugzeugstrukturbauteils, um zu gewährleisten, dass alle relevanten Arbeitspunkte des Flugzeugstrukturbauteils von einer Nietmaschine erreicht werden können. Zu diesem Zweck weisen die Positioniertürme jeweils eine vertikal - nach der vorliegenden Benennung in Z-Richtung - verfahrbare Haltevorrichtung auf, an denen der Aufspannrahmen abgestützt ist. Neben der grundsätzlich hierdurch möglichen Höhenbewegung des Aufnahmerahmens kann zusätzlich durch eine jeweils unterschiedliche vertikale Positionierung der Haltevorrichtung der Aufnahmerahmen und damit auch das von ihm aufgenommene Flugzeugstrukturbauteil gekippt werden, was auch als Rotation um die B-Achse bezeichnet wird. Die Positioniertürme selbst sind daneben in einer horizontalen Richtung - auch Y-Richtung genannt - verfahrbar.

Ferner weisen im Stand der Technik die Positioniertürme einen oder jeweils einen Drehantrieb zur Rotation der Haltevorrichtung und damit auch des Aufspannrahmens auf. Diese Drehbewegung um die Längsachse des Aufspannrahmens wird üblicherweise auch als Drehung um die A-Achse bezeichnet. Durch diesen prinzipiellen Aufbau wird eine ausreichende Flexibilität bei der Positionierung des Aufspannrahmens gewährleistet, um mit einer Nietmaschine, welche etwa an einem C-Gestell montiert ist, alle in Frage kommenden Nietpositionen zu erreichen. Regelmäßig ist das C-Gestell dabei zusätzlich zwischen den beiden Positioniertürmen verfahrbar. Die durch den Abstand der Positioniertürme definierte Richtung wird im vorliegenden auch als X-Richtung bezeichnet.

Problematisch an diesem Stand der Technik ist, dass die Konstruktion der Positioniertürme und insbesondere ihrer jeweiligen Haltevorrichtung mit dem Drehantrieb zur Rotation des Aufspannrahmens kompliziert und aufwändig ist. Die Positioniertürme müssen die regelmäßig sehr große Last des Aufspannrahmens selbst sowie des zu bearbeitenden Flugzeugstrukturbauteils nicht nur tragen, sondern diese auch - wie beschrieben - mittels der Haltevorrichtung vertikal verfahren und drehen können.

Für diese Drehung des Aufspannrahmens ist nicht nur ein entsprechender Motor, sondern auch ein Getriebe erforderlich, um überhaupt bei vertretbaren Motordimensionen eine Drehung des Aufspannrahmens mit dem aufgenommenen Flugzeugstrukturbauteil zu ermöglichen. Ferner muss auch noch ein Drehgelenk an den Haltevorrichtungen angeordnet sein, damit eine unabhängige vertikale Bewegung der Haltevorrichtungen entlang der Positioniertürme überhaupt möglich ist.

Im Ergebnis ergibt sich für diese Mechanik für den A-Antrieb eine hohe konstruktive Komplexität auf einem relativ kleinen Raum, bei der große Lasten bewältigt werden müssen und welche ihrerseits zu dem Gesamtgewicht und den Dimensionen der Positioniertürme beiträgt. Gewicht und Maße der Positioniertürme sind aber insbesondere dann kritisch, wenn deren horizontale Bewegung etwa in einer Y-Richtung vorgesehen ist. Die konstruktive Auslegung zur Bewegung solch großer Lasten ist entsprechend aufwändig und im Ergebnis mit hohen Kosten verbunden. Ferner spielt die Breite der Positioniertürme - also deren Ausdehnung in der X-Richtung, welche der Richtung von einem Positionierturm zum anderen entspricht - direkt in die Gesamtausdehnung der Bearbeitungsstation in dieser Richtung herein.

Folglich besteht das Problem der Erfindung darin, die aus dem Stand der Technik bekannte Bearbeitungsstation für Flugzeugstrukturbauteile so weiter zu entwickeln, dass bei gleichbleibender Flexibilität der Beweglich- und Positionierbarkeit des Flugzeugstrukturbauteils in der Bearbeitungsstation die Konstruktion einfacher, kompakter und günstiger wird.

Das obige Problem wird bezogen auf eine Bearbeitungsstation für Flugzeugstrukturbauteile gemäß dem Oberbegriff von Anspruch 1 durch die Merkmale des kennzeichnenden Teils von Anspruch 1 gelöst.

Wesentlich ist die Erkenntnis, dass jedenfalls Teile derjenigen Mechanik, welche die Drehbewegung des Aufspannrahmens ermöglicht, und hier insbesondere der Motor, von dem Positionierturm und insbesondere der Verfahreinheit entfernt und am Aufspannrahmen angeordnet werden können. Auf diese Weise wird einerseits der durch die Drängung der verschiedenen Komponenten knapp bemessene Raum am Positionierturm entlastet und andererseits in dem durch den Aufspannrahmen ohnehin vorgesehenen Raum eine weitere Nutzung vorgesehen. Mit anderen Worten wird dort, wo der Platz knapp ist, weniger Raum in Anspruch genommen und wiederum dort, wo noch ausreichend Raum vorhanden ist, dieser für eben diejenigen Komponenten verwendet, welche von dem Positionierturm entfernt wurden. Auf diese Weise wird eine klare Trennung der Komponenten nach ihrer Funktion vorgenommen.

Die bevorzugte Ausführungsform gemäß Anspruch 7 entwickelt den Vorschlag noch dadurch weiter, dass ein Getriebe des Drehantriebs nicht nur entfernt von dem Positionierturm und also am Aufspannrahmen angeordnet wird, sondern das Getriebe auch innerhalb des Rahmengehäuses des Aufspannrahmens vorgesehen ist. Auf diese Weise kann der Positionierturm entlastet werden ohne die Außenkontur des Aufspannrahmens zu vergrößern.

Andererseits kann gemäß der bevorzugten Ausfiihrungsform gemäß Anspruch 8 der entsprechende Motor des Drehantriebs außerhalb des Rahmengehäuses angeordnet sein. Dies ist insbesondere dann sinnvoll, wenn eine gute Zugänglichkeit zu diesem Motor zwecks Wartungs- oder sonstiger Arbeiten sinnvoll erscheint.

Wie bereits festgestellt, ist der Aufspannrahmen regelmäßig sehr schwer. Um dennoch die Größe des Motors, welche für seine Drehung notwendig ist, in Grenzen zu halten, kann ein Vorgelege vorgesehen sein, durch welchen ein kleiner dimensionierter Motor mit einer entsprechend höheren Drehzahl zur Drehung des Aufspannrahmens verwendet werden kann. Gerade bei diesem zwangsläufig platzraubenden Vorgelege bietet es sich an, es innerhalb des Rahmengehäuses des Aufspannrahmens anzuordnen, wie in der bevorzugten Ausführungsform des Anspruchs 9 vorgesehen.

Der Aufspannrahmen ist regelmäßig rechteckig ausgeformt, woraus sich ergibt, dass sich die Seitenkanten dieses Rechtecks neben der Stelle, an welcher die Haltevorrichtung den Aufspannrahmen stützt, zur Anbringung derjenigen Teile des Drehantriebs, die am Aufspannrahmen befestigt sein sollen, besonders anbietet. Für eine solche seitlich versetzte Anordnung des Drehantriebs und speziell des Motors ist gemäß dem Anspruch 10 vorgesehen, dass das Vorgelege ein Zahnradgetriebe umfasst, das für diese seitlich versetzte Anordnung des Motors zur Haltevorrichtung besonders geeignet ist.

Im Folgenden wird die Erfindung anhand einer lediglich ein Ausführungsbeispiel darstellenden Zeichnung näher erläutert. In der Zeichnung zeigt
- Fig. 1: eine Schrägansicht einer vorschlagsgemäßen Bearbeitungsstation für Flugzeugstrukturbauteile,
- Fig. 2: eine vergrößerte Draufsicht des Verbindungsbereichs zwischen dem rechten dargestellten Positionierturm und dem Aufspannrahmen der Bearbeitungsstation der Fig. 1,
- Fig. 3: eine Schrägansicht des Verbindungsbereichs aus Fig. 2 und
- Fig. 4: eine seitliche Ansicht auf den Verbindungsbereich aus Fig. 2 von einem Innenbereich des Aufspannrahmens aus.

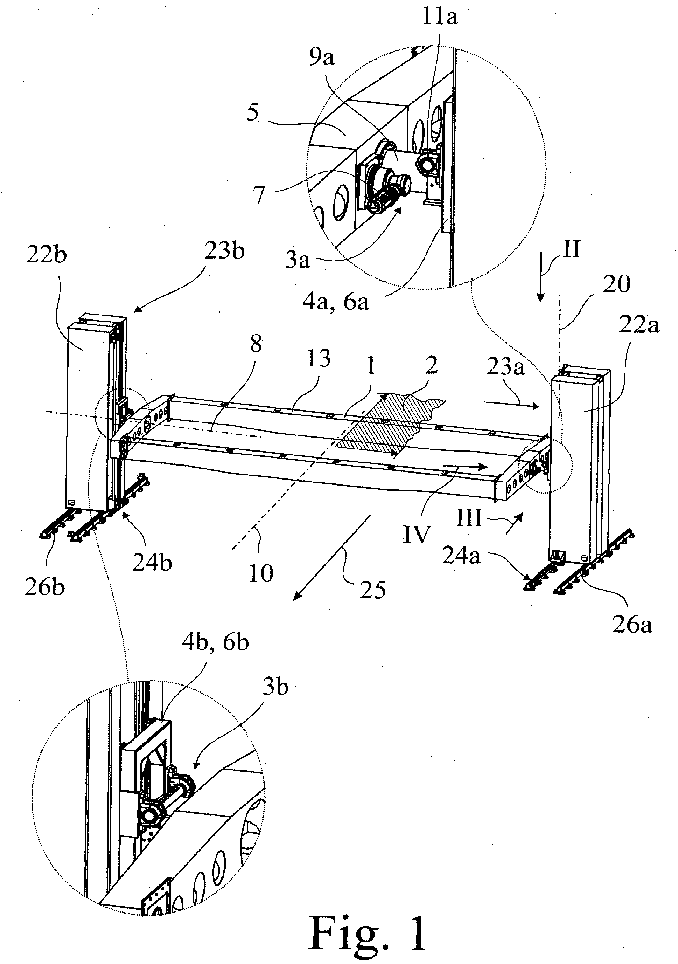

Die in den Fig. 1 bis 4 dargestellte vorschlagsgemäße Bearbeitungsstation für Flugzeugstrukturbauteile dient dazu, größere Komponenten und Strukturbauteile eines Flugkörpers und speziell eines Flugzeugs wie etwa Flügel oder Rumpfteile aufzunehmen und so zu positionieren, dass sie von einer entsprechenden Werkzeugmaschine bearbeitet werden können. Die gezeigte Bearbeitungsstation soll diese Flugzeugstrukturbauteile positionieren und also heben, drehen und kippen können, so dass eine flexible Erreichbarkeit aller gewünschten Arbeitspunkte, an denen eine Bearbeitung durch die Werkzeugmaschine gewünscht ist, gewährleistet wird. Dem Prinzip nach ist die gezeigte Bearbeitungsstation aber auch für die Handhabung von ähnlich dimensionierten Bauteilen aus anderen technischen Gebieten geeignet, so zum Beispiel von Strukturbauteilen aus der Fahrzeugtechnik und überall dort, wo große Strukturbauteile aus Faserverbundwerkstoffen eingesetzt werden. Dies schließt insbesondere den Schwer- oder Sondermaschinenbau ein.

Die vorschlagsgemäße Bearbeitungsstation umfasst einen Aufspannrahmen 1, welcher vorliegend rechteckig ist und an welchem ein Flugzeugstrukturbauteil direkt oder indirekt und auf verschiedene Weise befestigt werden kann. Ein solcher Aufspannrahmen 1 wird auch als Bauteilaufnahme bezeichnet. Der Aufspannrahmen 1 definiert eine geometrische Aufspannebene 2, welche derjenigen Ebene entspricht, auf welcher die von dem Aufspannrahmen 1 aufgenommenen Flugzeugstrukturbauteile angeordnet sind. Im vorliegenden Fall ergibt sich diese Aufspannebene 2 aus der durch die rechteckige Form des Aufspannrahmens 1 definierten Fläche.

Die vorschlagsgemäße Bearbeitungsstation weist ferner eine Haltevorrichtung 3a zum Stützen des Aufspannrahmens 1, eine Verfahreinheit 4a zur Bewegung der Haltevorrichtung 3a und einen Drehantrieb 5 auf.

Die Verfahreinheit 4a, welche in dem dargestellten Beispiel einen Laufwagen 6a umfasst, stützt indirekt über die Haltevorrichtung 3a den Aufspannrahmen 1. Unter der Verfahreinheit 4a sind also diejenigen Teile der Bearbeitungsstation zu verstehen, welche mit der Haltevorrichtung 3a in Verbindung stehen, sie gegenüber abstützen und eine Bewegung der Haltevorrichtung 3a ermöglichen.

Dementsprechend sind mit als Haltevorrichtung 3a alle Teile zu bezeichnen, welche durch die Verfahreinheit 4a bewegt werden können und welche die stützende Verbindung zwischen der Verfahreinheit 4a und dem Aufspannrahmen 1 bilden.

Vorschlagsgemäß weist der Drehantrieb 5 einen Motor 7 für eine Rotation des Aufspannrahmens 1 um eine Rahmenachse 8 auf. Bei der Rahmenachse 8 handelt es sich um eine Achse im geometrischen Sinne. Im in der Fig. 1 dargestellten Beispiel wird diese Rahmenachse 8 durch diejenige Gerade gebildet, welche die Mittelpunkte der beiden kürzeren Rechteckseiten des Aufspannrahmens 1 miteinander verbindet. Diese Rahmenachse 8 wird auch als A-Achse und der Drehantrieb 5 entsprechend als A-Antrieb bezeichnet. Die Rahmenachse 8, um welche eine solche Drehung stattfindet, kann grundsätzlich aber auch beliebig versetzt zu der durch die beiden Mittelpunkte wie beschrieben definierten Geraden verlaufen.

Vorschlagsgemäß ist die Rahmenachse 8 im wesentlichen parallel zu der Aufnahmeebene 2 ausgerichtet. Dies ist insbesondere in der Fig. 1 zu erkennen. Die geforderte Parallelität in diesem Sinne schließt sowohl ein, dass die Rahmenachse 8 durch die Aufspannebene 2 verläuft, als auch dass sie versetzt zu der Aufspannebene 2 angeordnet ist.

Grundsätzlich können die Verfahreinheit 4a, die Haltevorrichtung 3a, der Drehantrieb 5 und der Motor 7 mehrteilig ausgebildet sein und sogar mit ihren einzelnen Komponenten räumlich getrennt sein.

Die vorschlagsgemäße Bearbeitungsstation ist nun dadurch gekennzeichnet, dass der Motor 7 an dem Aufspannrahmen 1 angeordnet, insbesondere befestigt ist. Eine Befestigung in diesem Sinne schließt sowohl eine direkte Befestigung am Aufspannrahmen 1 als auch eine indirekte Befestigung über ein - jedenfalls von der Haltevorrichtung 3a verschiedenes - Verbindungselement ein, welches im vorliegenden Ausführungsbeispiel aber nicht vorgesehen ist. Somit muss weder an der Haltevorrichtung 3a selbst noch an der Verfahreinheit 4a der für den Motor 7 notwendige Raum vorgehalten werden. Bei dem vorschlagsgemäßen Motor 7 kann es sich um eine beliebige Art von geeignetem Motor 7 und insbesondere um einen Elektromotor handeln.

Die vorschlagsgemäße Bearbeitungsstation kann ferner ein - hier nicht dargestelltes - C-Gestell mit einer auf dem C-Gestell befestigten Nietmaschine umfassen, mit welcher Nietverbindungen auf dem von dem Aufspannrahmen 1 aufgenommenen und mit ihm positionierten Flugzeugstrukturbauteil hergestellt werden können.

Besonders bevorzugt ist, dass der Aufspannrahmen 1 um die Haltevorrichtung 3a drehbar gelagert ist. Mit anderen Worten dreht sich bei der Rotation des Aufspannrahmens 1 um die Rahmenachse 8 die Haltevorrichtung 3a nicht zwangsläufig mit dem Aufspannrahmen 1. Vielmehr kann sich der Aufspannrahmen 1 um die Haltevorrichtung 3a bewegen.

Weiter ist bevorzugt, dass die Bearbeitungsstation - wie ebenfalls in der Fig. 1 dargestellt - eine weitere Haltevorrichtung 3b zum Stützen des Aufspannrahmens 1 und eine weitere Verfahreinheit 4b zur Bewegung der weiteren Haltevorrichtung 3b umfasst. Die weitere Verfahreinheit 4b umfasst im dargestellten Fall einen weiteren Laufwagen 4b. Diese Ausgestaltung mit zwei Verfahreinheiten 4a,b bietet sich insbesondere bei besonders schweren Flugzeugstrukturbauteilen an. Die weitere Verfahreinheit 4b und die weitere Haltevorrichtung 3b können wesentlich identisch zu der erstgenannten Verfahreinheit 4a und der Haltevorrichtung 3a sein.

Besondere Vorteile ergeben sich, wenn die Verfahreinheit 4a und die weitere Verfahreinheit 4b an jeweils gegenüberliegenden Seiten des Aufspannrahmens 1 angeordnet sind. Im Falle der Bearbeitungsstation gemäß der Fig. 1 mit einem rechteckigen Aufnalunerahmen 1 bietet es sich an, dass die Verfahreinheiten 4a,b speziell an den jeweils gegenüberliegenden kürzeren, Seiten des rechteckigen Aufspannrahmens 1 angeordnet sind.

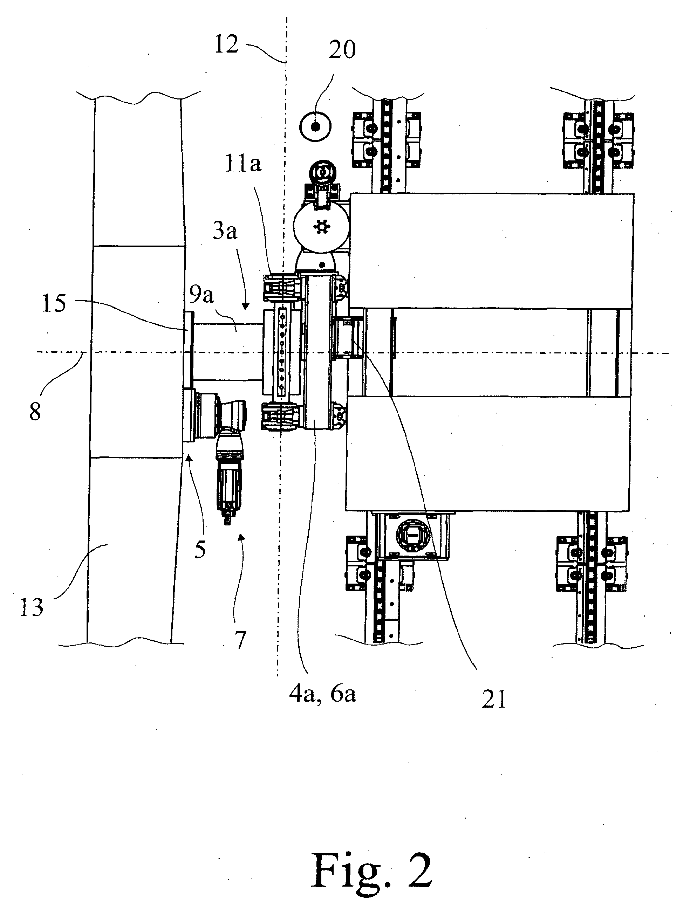

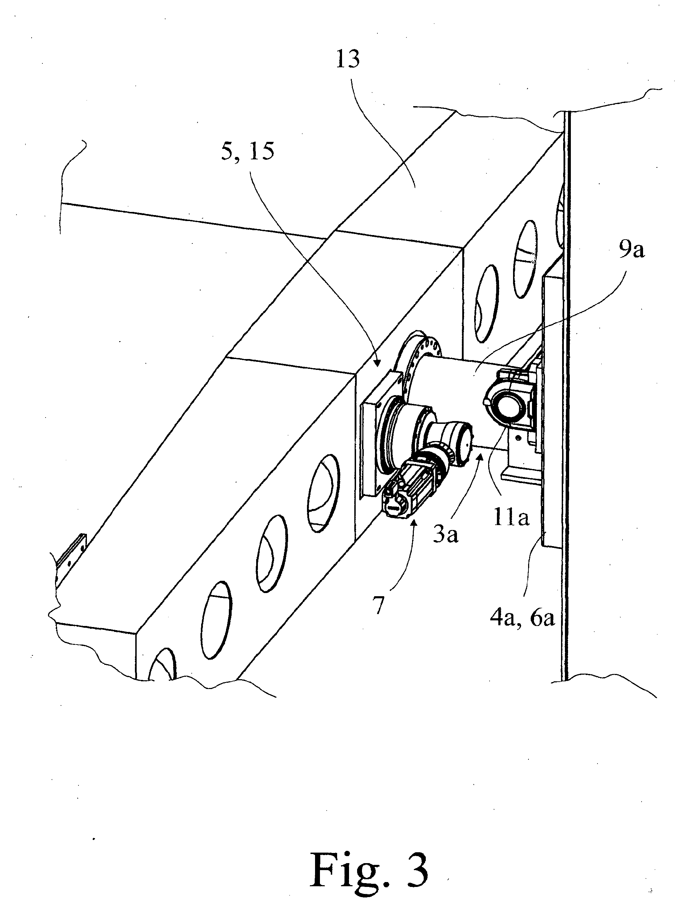

Bevorzugt ist auch, dass wie insbesondere in den Fig. 2 und 3 gezeigt, die Haltevorrichtung 3a eine Stützachse 9a umfasst, um welche der Aufspannrahmen 1 drehbar gelagert ist. Diese Stützachse 9a kann insbesondere, wie ebenfalls in den Fig. 2 und 3 dargestellt, rohrartig ausgeformt sein.

Für den Fall, dass eine weitere Verfahreinheit 4b vorgesehen ist, bietet es sich an, dass die weitere Haltevorrichtung 3b dieser weiteren Verfahreinheit 4b ebenfalls eine weitere Stützachse 9b umfasst, um welche der Aufspannrahmen 1 drehbar gelagert ist. Diese weitere Stützachse 9b ist in der Fig. 1 zu erkennen. Vorteilhaft ist es hier, wenn die Stützachse 9a und die weitere Stützachse 9b kollinear zueinander sind, so dass dieselbe Rotation des Aufspannrahmens 1 um die Rahmenachse 8 von beiden Stützachsen 9a,b gemeinsam getragen werden kann.

Um neben der Rotation des Aufnahmerahmens 1 um die Rahmenachse 8 auch eine Kippbewegung des Aufnahmerahmens 1 um eine zur Rahmenachse 8 senkrechte Kippachse 10 zu ermöglichen, welche ebenfalls parallel zur Aufspannebene 2 angeordnet ist, ist besonders bevorzugt vorgesehen, dass die Stützachse 9a mit der Verfahreinheit 4a über ein Drehgelenk 11a verbunden ist, wodurch die Stützachse 9a um eine zur ihr rechtwinkelig ausgerichtete Schwenkachse 12 schwenkbar gelagert ist. Diese Kippachse 10 wird auch als B-Achse bezeichnet.

Eine solche Kippbewegung kann dadurch bewirkt, dass im Falle von zwei Verfahreinheiten 4a,b die beiden Stützachsen 9a,b eine unterschiedliche Höhe in der Vertikalen einnehmen, worauf untenstehend noch näher eingegangen wird. Mit dem Drehgelenk 11a kann die Stützachse 9a, ggf. ebenso wie die weitere Stützachse 9b, der Kippbewegung des Aufspannrahmens 1 folgen. Ebenso bevorzugt ist, dass die weitere Stützachse 9b mit der weiteren Verfahreinheit 4b über ein weiteres Drehgelenk 11b verbunden ist.

Bei einer solchen Kippbewegung verkürzt sich der durch den Aufspannrahmen 1 gebildete Abstand in der Horizontalen und speziell in der horizontalen Projektion der Rahmenachse 8. Dies kann beispielsweise durch eine Bewegung der Verfahreinheiten 4a,b mit ihren jeweiligen Haltevorrichtungen 3a,b zueinander oder über ein Ausfahren einer der beiden oder beider Stützachsen 9a,b ausgeglichen werden.

Bei dem Drehgelenk 11a und/oder bei dem weiteren Drehgelenk 11b kann es sich insbesondere, wie in den Fig. 2 und 3 für das Drehgelenk 11a genauer dargestellt, um ein einfaches Scharnier handeln. Wie ebenfalls in den Fig. 2 und 3 dargestellt, kann die Schwenkachse 12 horizontal verlaufen.

Ferner ist beispielhaft vorgesehen, dass die genannte Schwenkachse 12 nicht die Rahmenachse 8 schneidet, sondern versetzt zu der Rahmenachse 8 verläuft. Dementsprechend ist das Drehgelenk 11a auch versetzt - gemäß der Fig. 3 vertikal versetzt - zu der Stützachse 9a angeordnet. Auf diese Weise wird erreicht, dass die Stützachse 9a kürzer ausgeführt werden kann, wodurch ein geringeres, aus dem Gewicht des Aufspannrahmen 1 herrührendes Drehmoment auf die Verfahreinheit 4a wirkt.

Denkbar ist ferner, dass ein weiterer Motor an dem Aufspannrahmen 1 bei der weiteren Haltevorrichtung 3b und der weiteren Verfahreinheit 4b vorgesehen ist. Die nachstehenden beschriebenen Ausgestaltungen des Drehantriebs 5 und des Motors 7 können entsprechend auch bei dem weiteren Motor und seinen zugehörigen Komponenten verwirklicht sein.

Eine weiter bevorzugte Weiterentwicklung der vorschlagsgemäßen Bearbeitungsstation sieht vor, dass der Aufspannrahmen 1 ein Rahmengehäuse 13 umfasst, welches Rahmengehäuse 13 einen Innenraum 14 bildet. Dabei muss das Rahmengehäuse 13 den Innenraum 14 nicht notwendigerweise vollständig umschließen.

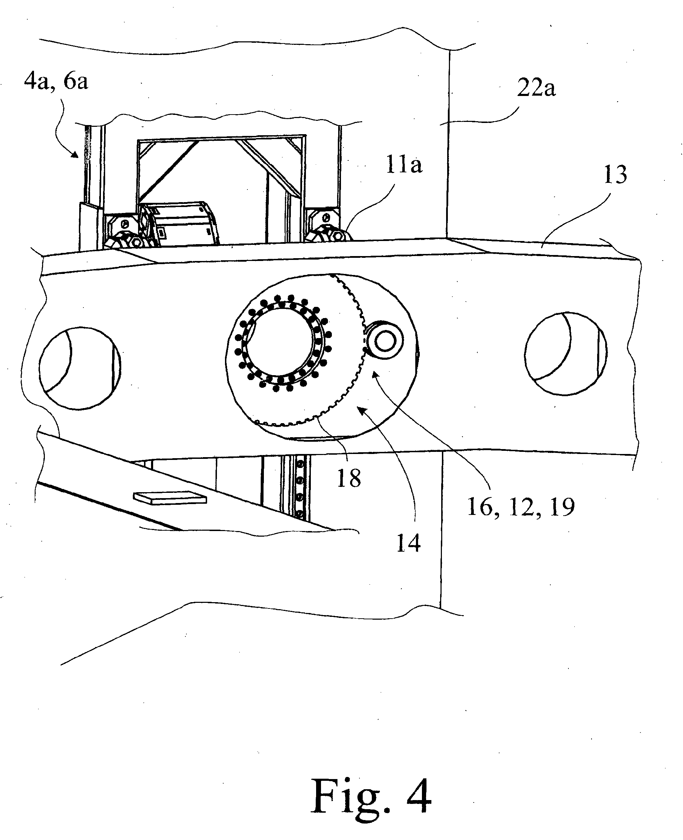

Wie in der Fig. 1 zu erkennen ist, bildet dieses Rahmengehäuse 13 wesentlich die rechteckige Grundform des Aufspannrahmens 1. Dabei ist ebenfalls vorgesehen, dass ein Getriebe 15 des Drehantriebs 5 zumindest teilweise im Innenraum 14 angeordnet ist, welcher hier in der Fig. 4 gekennzeichnet ist. Auf diese Weise wird der durch das Rahmengehäuse 13 zur Verfügung gestellte Bauraum, welcher nach dem Stand der Technik nicht für den Drehantrieb 5 oder eine ähnliche Komponente verwendet wird, einer sinnvollen Verwendung zugeführt. Möglich ist ebenfalls, dass das Getriebe 15 vollständig im Innenraum 14 angeordnet sein.

Aus der Fig. 1 und noch deutlicher aus den Fig. 2 und 3 ist zu erkennen, dass gemäß einer bevorzugten Ausfiihrungsfonn der Motor 7 außerhalb des Innenraums 14 - und damit auch außerhalb des Rahmengehäuses 13 - angeordnet ist. Die Anordnung des Motors 7 außerhalb des Rahmengehäuses 13 ermöglicht eine gute Erreichbarkeit des Motors 7 zwecks Wartung oder auch Austausch, etwa falls sich durch die Bestückung des Aufspannrahmens 1 durch ein zu bearbeitendes Flugzeugstrukturbauteil mit deutlich unterschiedlichen Abmessungen andere Leistungsanforderungen ergeben sollten.

Alternativ hierzu kann vorgesehen sein, dass der Motor 7 innerhalb des Rahmengehäuses 13 angeordnet ist. Hier wiederum ergibt sich vorteilhafterweise, dass der Innenraum 14 verwendet wird und sich durch Anordnung des Motors 7 im Innenraum 14 die äußere Kontur des Aufspannrahmens 1 nicht verändert.

Wie bereits festgestellt wurde, ist sowohl der Aufspannrahmen 1 als auch das von ihm aufgenommene Flugzeugstrukturbauteil regelmäßig sehr groß und entsprechend schwer. Um eine kompaktere Dimensionierung des Motors 7 des Drehantriebs 5 für die Rotation des Aufspannrahmens 1 um die Rahmenachse 8 - entsprechend der A-Achse - zu ermöglichen, ist es vorteilhaft, dass das Getriebe 15 ein Vorgelege 16 umfasst.

Bevorzugt ist, dass dieses Vorgelege 16 im Innenraum 15 angeordnet ist. Alternativ kann es aber auch außerhalb des Innenraums 15 angeordnet sein, so etwa an der Außenseite des Rahmengehäuses 14. Gerade ein solches Vorgelege 16, welches durch seine Übersetzung eine kleinere Dimensionierung des Motors 7 erlaubt, nimmt regelmäßig einen größeren Raum ein, so dass sich hier die Anordnung innerhalb des Rahmengehäuses 14 und also im Innenraum 15 besonders anbietet.

Eine bevorzugte Verwirklichung dieses Vorgeleges 16 ergibt sich dadurch, dass das Vorgelege 16 ein Zahnradgetriebe 17 umfasst, wobei ein Zahnrad 18 des Zahnradgetriebes 17 drehfest mit der Haltevorrichtung 3a und hier insbesondere mit der Stützachse 9a verbunden ist. Diese bevorzugte Anordnung stellt eine besonders unkomplizierte Bauweise für ein Vorgelege 16 dar.

Diese Ausführungsform wird dadurch noch einmal weiterentwickelt, dass das Zahnradgetriebe 17 ein Stirnradgetriebe 19 ist.

Weiter ist besonders bevorzugt, dass die Verfahreinheit 4a zur linearen Bewegung der Haltevorrichtung 3a entlang einer Verschieberichtung 20 eingerichtet ist. Zu diesem Zweck weist im in den Fig. 1 bis 3 dargestellten Ausführungsbeispiel die Verfahreinheit 4a eine Vertikalschiene 21 auf, welche eine lineare Bewegung des Laufwagens 6a und damit der Haltevorrichtung 3a in einer entsprechenden Verschieberichtung 20 erlaubt.

Hierauf aufbauend wird die bereits beschriebene Kippbewegung des Aufspannrahmens 1 um die Kippachse 10 dadurch ermöglicht, dass die Verfahreinheit 4a und die weitere Verfahreinheit 4b zur jeweils unabhängigen Bewegung der Haltevorrichtung 3a und der weiteren Haltevorrichtung 3b eingerichtet sind. Hierdurch ist der Aufspannrahmen 1 um die Kippachse 10 drehbar, welche Kippachse 10 rechtwinklig sowohl zur Rahmenachse 8 als auch zur Verschieberichtung 20 angeordnet ist.

Es kann also eine gekippte Position des Aufspannrahmens 1 um diese Kippachse 10 einfach dadurch hergestellt werden, dass durch die Verfahreinheiten 4a,b die Haltevorrichtungen 3a,b auf eine jeweils unterschiedliche Position entlang der Verschieberichtung 20 geführt werden, im Falle des Ausführungsbeispiels der Fig. 1 bis 4 also auf eine zueinander unterschiedliche vertikale Höhe.

Wie in dem in den Fig. 1 bis 4 dargestellten Ausführungsbeispiel dargestellt, kann die Verfahreinheit 4a einen Positionierturm 22a umfassen, an dessen Seite 23a die Haltevorrichtung 3a angeordnet ist. Entsprechend kann die weitere Verfahreinheit 4b einen weiteren Positionierturm 22b umfassen, an dessen Seite 23b die weitere Haltevorrichtung 3b angeordnet ist.

Neben dieser bereits beschriebenen Beweglichkeit der Haltevorrichtungen 3a,b durch die Verfahreinheiten 4a,b, welche sowohl eine Höhenverstellung als auch eine Kippbewegung des Aufspannrahmens 1 erlaubt, ist es ferner möglich, dass die Verfahreinheit 4a - wie in der Fig. 1 dargestellt - eine Laufvorrichtung 24a zur linearen Bewegung des Positionierturms 22a entlang einer Laufrichtung 25 umfasst. Speziell kann diese Laufvorrichtung 24a eine Y-Schiene 26a aufweisen, auf welcher eine Bewegung des Positionierturms 22a in der auch als Y-Richtung bezeichneten Laufrichtung 25. Dabei verläuft die Laufrichtung 25 vorzugsweise rechtwinklig zur Verschieberichtung 20. Dieser rechtwinklige Verlauf ist im Ausführungsbeispiel der Fig. 1 erkennbar dadurch gegeben, dass die Laufrichtung 25 horizontal und die Verschieberichtung 20 vertikal verläuft.

Für den Fall des Vorhandenseins eins weiteren Positionierturms 22b kann die weitere Verfahreinheit 4b eine weitere Laufvorrichtung 24b zur linearen Bewegung des weiteren Positionierturms 22b entlang der Laufrichtung 25 umfassen.

Dies erlaubt wiederum eine größere Flexibilität bei der Handhabung und Positionierung des Aufspannrahmens 1 in der Bearbeitungsstation, insbesondere relativ zu einem möglicherweise vorhandenen C-Gestell mit einer Nietmaschine.

Die lineare Bewegung des Positionierturms 22a und des weiteren Positionierturms 22b ist also parallel.

## Patentansprüche

1. Bearbeitungsstation für Flugzeugstrukturbauteile mit einem Aufspannrahmen (1), welcher eine Aufspannebene (2) definiert, einer Haltevorrichtung (3a) zum Stützen des Aufspannrahmens (1), einer Verfahreinheit (4a) zur Bewegung der Haltevorrichtung (3a) und einem Drehantrieb (5), welcher einen Motor (7) für eine Rotation des Aufspannrahmens (1) um eine Rahmenachse (8) aufweist, welche Rahmenachse (8) im wesentlichen parallel zu der Aufspannebene (2) ausgerichtet ist,
**dadurch gekennzeichnet,**
**dass** der Motor (7) an dem Aufspannrahmen (1) angeordnet, insbesondere befestigt ist.

2. Bearbeitungsstation nach Anspruch 1, **dadurch gekennzeichnet, dass** der Aufspannrahmen (1) um die Haltevorrichtung (3a) drehbar gelagert ist.

3. Bearbeitungsstation nach Anspruch 1 oder 2, **dadurch gekennzeichnet, dass** die Bearbeitungsstation eine weitere Haltevorrichtung (3b) zum Stützen des Aufspannrahmens (1) und eine weitere Verfahreinheit (4b) zur Bewegung der weiteren Haltevorrichtung (3b) umfasst, vorzugsweise, wobei die Verfahreinheit (4a) und die weitere Verfahreinheit (4b) an jeweils gegenüberliegenden Seiten des Aufspannrahmens (1) angeordnet sind.

4. Bearbeitungsstation nach Anspruch 2 oder 3, **dadurch gekennzeichnet, dass** die Haltevorrichtung (3a) eine Stützachse (9a) umfasst, um welche der Aufspannrahmen (1) drehbar gelagert ist, vorzugsweise, dass die weitere Haltevorrichtung (3b) eine weitere Stützachse (9b) umfasst, um welche der Aufspannrahmen (1) drehbar gelagert ist, insbesondere, dass die Stützachse (9a) und die weitere Stützachse (9b) kollinear zueinander sind.

5. Bearbeitungsstation nach Anspruch 4, **dadurch gekennzeichnet, dass** die Stützachse (9a) mit der Verfahreinheit (4a) über ein Drehgelenk (11a) verbunden ist, wodurch die Stützachse (9a) um eine zu ihr rechtwinklig ausgerichtete Schwenkachse (12) schwenkbar gelagert ist, vorzugsweise, dass die weitere Stützachse (9b) mit der weiteren Verfahreinheit (4b) über ein weiteres Drehgelenk (11b) verbunden ist.

6. Bearbeitungsstation nach einem der Ansprüche 1 bis 5, **dadurch gekennzeichnet, dass** der Aufspannrahmen (1) ein Rahmengehäuse (13) umfasst, welches Rahmengehäuse (13) einen Innenraum (14) bildet.

7. Bearbeitungsstation nach Anspruch 6, **dadurch gekennzeichnet, dass** ein Getriebe (15) des Drehantriebs (5) am Rahmengehäuse (13), vorzugsweise, zumindest teilweise, insbesondere vollständig, im Innenraum (14) angeordnet ist.

8. Bearbeitungsstation nach Anspruch 6 oder 7, **dadurch gekennzeichnet, dass** der Motor (7) außerhalb des Innenraums (14) angeordnet ist.

9. Bearbeitungsstation nach einem der Ansprüche 6 bis 8, **dadurch gekennzeichnet, dass** das Getriebe (15) ein Vorgelege (16) umfasst, vorzugsweise, welches Vorgelege (16) im Innenraum (14) angeordnet ist.

10. Bearbeitungsstation nach Anspruch 9, **dadurch gekennzeichnet, dass** das Vorgelege (16) ein Zahnradgetriebe (17) umfasst, wobei ein Zahnrad (18) des Zahnradgetriebes (17) drehfest mit der Haltevorrichtung (3), vorzugsweise mit der Stützachse (9a), verbunden ist.

11. Bearbeitungsstation nach Anspruch 10, **dadurch gekennzeichnet, dass** das Zahnradgetriebe (17) ein Stirnradgetriebe (19) ist.

12. Bearbeitungsstation nach einem der Ansprüche 1 bis 11, **dadurch gekennzeichnet, dass** die Verfahreinheit (4a) zur linearen Bewegung der Haltevorrichtung (3a) entlang einer Verschieberichtung (20) eingerichtet ist.

13. Bearbeitungsstation nach einem der Ansprüche 1 bis 12, **dadurch gekennzeichnet, dass** die Verfahreinheit (4a) und die weitere Verfahreinheit (4b) zur jeweils unabhängigen Bewegung der Haltevorrichtung (3a) und der weiteren Haltevorrichtung (3b) eingerichtet sind, wodurch der Aufspannrahmen (1) um eine Kippachse (10) drehbar ist, welche Kippachse (10) rechtwinklig sowohl zur Rahmenachse (8) als auch zur Verschieberichtung (20) angeordnet ist.

14. Bearbeitungsstation nach einem der Ansprüche 1 bis 13, **dadurch gekennzeichnet, dass** die Verfahreinheit (4a) einen Positionierturm (22a) umfasst, an dessen Seite (23a) die Haltevorrichtung (3a) angeordnet ist, vorzugsweise, dass die weitere Verfahreinheit (4b) einen weiteren Positionierturm (22b) umfasst, an dessen Seite (23b) die weitere Haltevorrichtung (3b) angeordnet ist.

15. Bearbeitungsstation nach Anspruch 14, **dadurch gekennzeichnet, dass** die Verfahreinheit (4a) eine Laufvorrichtung (24a) zur linearen Bewegung des Positionierturms (22a) entlang einer Laufrichtung (25) umfasst, vorzugsweise, wobei die Laufrichtung (25) rechtwinklig zur Verschieberichtung (20) verläuft, insbesondere, wobei die weitere Verfahreinheit (4b) eine weitere Laufvorrichtung (24b) zur linearen Bewegung des weiteren Positionierturms (22b) entlang der Laufrichtung (25) umfasst.

## Claims

1. Machining station for structural aircraft components, having a mounting frame (1), which defines a mounting plane (2), having a retaining device (3a) for supporting the mounting frame (1), having a displacement unit (4a) for moving the retaining device (3a), and having a rotary drive (5), which has a motor (7) for rotating the mounting frame (1) about a frame axis (8), which frame axis (8) is oriented essentially parallel to the mounting plane (2),
**characterized**
**in that** the motor (7) is arranged, in particular fastened, on the mounting frame (1).

2. Machining station according to Claim 1, **characterized in that** the mounting frame (1) is mounted such that it can be rotated about the retaining device (3a).

3. Machining station according to Claim 1 or 2, **characterized in that** the machining station comprises a further retaining device (3b) for supporting the mounting frame (1) and also a further displacement unit (4b) for moving the further retaining device (3b), preferably wherein the displacement unit (4a) and the further displacement unit (4b) are arranged on respectively opposite sides of the mounting frame (1).

4. Machining station according to Claim 2 or 3, **characterized in that** the retaining device (3a) comprises a supporting spindle (9a), about which the mounting frame (1) is mounted in a rotatable manner, preferably **in that** the further retaining device (3b) comprises a further supporting spindle (9b), about which the mounting frame (1) is mounted in a rotatable manner, and in particular in that the supporting spindle (9a) and the further supporting spindle (9b) are collinear in relation to one another.

5. Machining station according to Claim 4, **characterized in that** the supporting spindle (9a) is connected to the displacement unit (4a) via a rotary articulation (11a), as a result of which the supporting spindle (9a) is mounted such that it can be pivoted about a pivot axis (12) oriented at right angles to it, and preferably **in that** the further supporting spindle (9b) is connected to the further displacement unit (4b) via a further rotary articulation (11b).

6. Machining station according to one of Claims 1 to 5, **characterized in that** the mounting frame (1) comprises a frame housing (13), which frame housing (13) forms an interior (14).

7. Machining station according to Claim 6, **characterized in that** a gear mechanism (15) of the rotary drive (5) is arranged on the frame housing (13), preferably at least partially, in particular completely, in the interior (14).

8. Machining station according to Claim 6 or 7, **characterized in that** the motor (7) is arranged outside the interior (14).

9. Machining station according to one of Claims 6 to 8, **characterized in that** the gear mechanism (15) comprises a reduction-gear device (16), which reduction-gear device (16) is preferably arranged in the interior (14).

10. Machining station according to Claim 9, **characterized in that** the reduction-gear device (16) comprises a toothed gear mechanism (17), wherein a gearwheel (18) of the toothed gear mechanism (17) is connected in a rotationally fixed manner to the retaining device (3), preferably to the supporting spindle (9a).

11. Machining station according to Claim 10, **characterized in that** the toothed gear mechanism (17) is a spur-gear mechanism (19).

12. Machining station according to one of Claims 1 to 11, **characterized in that** the displacement unit (4a) is intended for moving the retaining device (3a) linearly along a displacement direction (20).

13. Machining station according to one of Claims 1 to 12, **characterized in that** the displacement unit (4a) and the further displacement unit (4b) are intended for moving the retaining device (3a) and the further retaining device (3b) independently in each case, as a result of which the mounting frame (1) can be rotated about a tilting axis (10), which tilting axis (10) is arranged at right angles both to the frame axis (8) and to the displacement direction (20).

14. Machining station according to one of Claims 1 to 13, **characterized in that** the displacement unit (4a) comprises a positioning tower (22a), on the side (23a) of which the retaining device (3a) is arranged, and preferably **in that** the further displacement unit (4b) comprises a further positioning tower (22b), on the side (23b) of which the further retaining device (3b) is arranged.

15. Machining station according to Claim 14, **characterized in that** the displacement unit (4a) comprises a running device (24a) for moving the positioning tower (22a) linearly along a running direction (25), preferably wherein the running direction (25) runs at right angles to the displacement direction (20), and in particular wherein the further displacement unit (4b) comprises a further running device (24b) for moving the further positioning tower (22b) linearly along the running direction (25).

## Revendications

1. Station d'usinage pour des composants de structure d'avion avec un cadre de montage (1), qui définit un plan de montage (2), avec un dispositif de maintien (3a) pour supporter le cadre de montage (1), avec une unité de déplacement (4a) pour le mouvement du dispositif de maintien (3a) et avec un entraînement rotatif (5), qui présente un moteur (7) pour une rotation du cadre de montage (1) autour d'un axe de cadre (8), axe de cadre (8) qui est orienté essentiellement parallèlement au plan de montage (2), **caractérisée en ce que** le moteur (7) est disposé, en particulier fixé, sur le cadre de montage (1).

2. Station d'usinage selon la revendication 1, **caractérisée en ce que** le cadre de montage (1) est monté de façon rotative autour du dispositif de maintien (3a).

3. Station d'usinage selon la revendication 1 ou 2, **caractérisée en ce que** la station d'usinage comprend un autre dispositif de maintien (3b) pour supporter le cadre de montage (1) et une autre unité de déplacement (4b) pour le mouvement de l'autre dispositif de maintien (3b), de préférence dans laquelle l'unité de déplacement (4a) et l'autre unité de déplacement (4b) sont disposées sur des côtés respectivement opposés du cadre de montage (1).

4. Station d'usinage selon la revendication 2 ou 3, **caractérisée en ce que** le dispositif de maintien (3a) comporte un axe de support (9a), autour duquel le cadre de montage (1) est monté de façon rotative, de préférence **en ce que** l'autre dispositif de maintien (3b) comporte un autre axe de support (9b), autour duquel le cadre de montage (1) est monté de façon rotative, en particulier **en ce que** l'axe de support (9a) et l'autre axe de support (9b) sont colinéaires l'un à l'autre.

5. Station d'usinage selon la revendication 4, **caractérisée en ce que** l'axe de support (9a) est assemblé à l'unité de déplacement (4a) par une articulation rotative (11a), l'axe de support (9a) étant ainsi monté de façon pivotante autour d'un axe de pivotement (12) qui lui est perpendiculaire, de préférence **en ce que** l'autre axe de support (9b) est assemblé à l'autre unité de déplacement (4b) par une autre articulation rotative (11b).

6. Station d'usinage selon l'une quelconque des revendications 1 à 5, **caractérisée en ce que** le cadre de montage (1) comprend un corps de cadre (13), corps de cadre (13) qui forme un espace intérieur (14).

7. Station d'usinage selon la revendication 6, **caractérisée en ce qu'**une transmission (15) de l'entraînement rotatif (5) est disposée sur le corps de cadre (13), de préférence au moins partiellement, en particulier entièrement dans l'espace intérieur (14).

8. Station d'usinage selon la revendication 6 ou 7, **caractérisée en ce que** le moteur (7) est disposé à l'extérieur de l'espace intérieur (14).

9. Station d'usinage selon l'une quelconque des revendications 6 à 8, **caractérisée en ce que** la transmission (15) comprend un renvoi (16), renvoi (16) qui est de préférence disposé dans l'espace intermédiaire (14).

10. Station d'usinage selon la revendication 9, **caractérisée en ce que** le renvoi (16) comprend un engrenage (17), dans laquelle une roue dentée (18) de l'engrenage (17) est reliée de façon calée en rotation au dispositif de maintien (3), de préférence à l'axe de support (9a).

11. Station d'usinage selon la revendication 10, **caractérisée en ce que** l'engrenage (17) est un engrenage droit (19).

12. Station d'usinage selon l'une quelconque des revendications 1 à 11, **caractérisée en ce que** l'unité de déplacement (4a) est conçue pour le mouvement linéaire du dispositif de maintien (3a) le long d'une direction de déplacement (20).

13. Station d'usinage selon l'une quelconque des revendications 1 à 12, **caractérisée en ce que** l'unité de déplacement (4a) et l'autre unité de déplacement (4b) sont conçues pour le mouvement respectivement indépendant du dispositif de maintien (3a) et de l'autre dispositif de maintien (3b), le cadre de montage (1) étant ainsi rotatif autour d'un axe de basculement (10), axe de basculement (10) qui est disposé perpendiculairement aussi bien à l'axe de cadre (8) qu'à la direction de déplacement (20).

14. Station d'usinage selon l'une quelconque des revendications 1 à 13, **caractérisée en ce que** l'unité de déplacement (4a) comprend une tour de positionnement (22a), sur le côté (23a) de laquelle le dispositif de maintien (3a) est disposé, de préférence **en ce que** l'autre unité de déplacement (4b) comprend une autre tour de positionnement (22b), sur le côté (23b) de laquelle l'autre dispositif de maintien (3b) est disposé.

15. Station d'usinage selon la revendication 14, **caractérisée en ce que** l'unité de déplacement (4a) comprend un dispositif de roulement (24a) pour le mouvement linéaire de la tour de positionnement (22a) le long d'une direction de roulement (25), de préférence dans laquelle la direction de roulement (25) est perpendiculaire à la direction de déplacement (20), en particulier dans laquelle l'autre unité de déplacement (4b) comprend un autre dispositif de roulement (24b) pour le mouvement linéaire de l'autre tour de positionnement (22b) le long de la direction de roulement (25).
